# EUROPÄISCHE PATENTSCHRIFT

(11) **EP 3 494 004 B1**
(45) Veröffentlichungstag und Bekanntmachung des Hinweises auf die Patenterteilung: **13.05.2020**
(21) Anmeldenummer: 17745659.7
(22) Anmeldetag: 12.07.2017
(51) Int. Cl.: B60K 35/00

(54) **VERFAHREN ZUR STEUERUNG EINER ANZEIGEVORRICHTUNG FÜR EIN FAHRZEUG UND FAHRZEUG MIT EINER ANZEIGEVORRICHTUNG**
METHOD FOR CONTROLLING A DISPLAY DEVICE FOR A VEHICLE AND VEHICLE WITH A DISPLAY DEVICE
PROCÉDÉ DE COMMANDE D'UN DISPOSITIF D'AFFICHAGE POUR UN VÉHICULE ET VÉHICULE DOTÉ D'UN DISPOSITIF D'AFFICHAGE

(30) Priorität: 02.08.2016 DE 102016214273
(43) Veröffentlichungstag der Anmeldung: 12.06.2019
(73) Patentinhaber: Audi AG, 85045 Ingolstadt (DE)
(72) Erfinder: HÉLOT, Jacques, 85051 Ingolstadt (DE); MERTENS, Joris, 85051 Ingolstadt (DE)
(86) Internationale Anmeldenummer: PCT/EP2017/067493
(87) Internationale Veröffentlichungsnummer: WO 2018/024452

(56) Entgegenhaltungen:
- EP-A1- 1 637 386
- WO-A1-2015/159340
- WO-A1-2016/093502
- DE-A1-102012 019 506
- JP-A- 2010 006 092

## Beschreibung

Die Erfindung betrifft ein Verfahren zur Steuerung einer Anzeigevorrichtung für ein Fahrzeug, gemäß dem Oberbegriff des Patentanspruchs 1 und ein Fahrzeug mit einer solchen Anzeigevorrichtung, gemäß dem Oberbegriff des Patentanspruchs 9.

Aus dem Stand der Technik sind bereits verschiedene Arten und Formen von Anzeigevorrichtungen mit beweglich gelagerten Anzeigeflächen bekannt. Dies können beispielsweise Anzeigen von Navigations- und/oder Multimediageräten sein aber auch unterschiedliche Flächen - etwa eine Rückseite eines vorderen Sitzes - , welche aufgrund ihrer sonstigen Funktion beweglich oder verstellbar sind und als Projektionsflächen für eine Darstellung von Bildinhalten mittels einer Projektoreinrichtung dienen. Nachteilig ist dabei, dass bisher trotz einer gewissen Einstellungsflexibilität durch die jeweilige bewegliche Lagerung, eine sinnvolle und sachgemäße Nutzung nur bei vollständiger Sichtbarkeit der gesamten Anzeigefläche durch einen jeweiligen Nutzer, das heißt in der Regel einen jeweiligen Fahrzeuginsassen, möglich ist. Dadurch sind die Möglichkeiten der Anordnung von Anzeigeflächen und der Nutzung vieler Flächen im Fahrzeug deutlich eingeschränkt. Die WO 2016/093502 A1 zeigt dazu relevanten Stand der Technik.

Aufgabe der vorliegenden Erfindung ist es, ein Verfahren zur Steuerung einer Anzeigevorrichtung für ein Fahrzeug sowie ein Fahrzeug mit einer solchen Anzeigevorrichtung bereitzustellen, durch welche eine optimale Nutzbarkeit einer Anzeigefläche in möglichst vielen Situationen ermöglicht wird.

Diese Aufgabe wird gelöst durch ein Verfahren und ein Fahrzeug mit den jeweiligen Merkmalen der unabhängigen Patentansprüche. Vorteilhafte Ausgestaltungen und Weiterbildungen der Erfindung sind in den abhängigen Patentansprüchen angegeben.

Bei dem erfindungsgemäßen Verfahren ist es vorgesehen, dass mittels eines Steuergerätes eine Darstellung einer Information auf einer beweglich relativ zu einem Innenverkleidungselement oder -bauteil eines Fahrzeugs gelagerten oder gehaltenen Anzeigefläche einer Anzeigevorrichtung des Fahrzeugs gesteuert wird in Abhängigkeit von einer verfügbaren Größe der Anzeigefläche. Bei einer, insbesondere bestimmungsgemäßen, physischen Bewegung der Anzeigefläche kann aus Sicht oder Perspektive eines Fahrgastraumes des Fahrzeugs ein erster Teilbereich der Anzeigefläche verdeckt werden. Ein weiterer, übriger Teilbereich der Anzeigefläche ist oder bleibt aus Sicht oder Perspektive des Fahrgastraumes auch bei, das heißt während und/oder nach, der Bewegung der Anzeigefläche weiterhin sichtbar. Dieser übrige, weiterhin sichtbare Teilbereich der Anzeigefläche definiert oder bestimmt die verfügbare Größe der Anzeigefläche. Mit anderen Worten ist also der sichtbare Teilbereich die verfügbare Anzeigefläche und eine Größe des sichtbaren Teilbereichs legt inhärent die verfügbare Größe der Anzeigefläche fest.

Die Sichtbarkeit aus Sicht oder Perspektive des Fahrgastraumes bedeutet dabei, dass ein jeweiliger Fahrzeuginsasse den weiteren Teilbereich einsehen kann. Insbesondere muss der Fahrzeuginsasse also zum Einsehen des weiteren, übrigen, sichtbaren Teilbereichs lediglich seinen Blick auf diesen richten und dazu nicht etwa die Anzeigefläche oder das Innenverkleidungselement bewegen.

Die Verdeckung des ersten Teilbereiches kann insbesondere durch ein Innenverkleidungsteil des Fahrzeugs, einen zur ganzen oder teilweisen Aufnahme der Anzeigefläche vorgesehenen Aufnahmeschacht, durch einen Teil der Anzeigefläche selbst - etwa bei einer Auf- oder Einrollbarkeit der Anzeigefläche - gegeben sein oder erfolgen. Der sichtbare Teilbereich kann insbesondere in zumindest einer Stellung oder Position der Anzeigefläche auch die gesamte Anzeigefläche umfassen. Das erfindungsgemäße Verfahren zeichnet sich dadurch aus, dass eine Anordnung und/oder eine Größe der Darstellung der Information durch das Steuergerät in Abhängigkeit von der physischen Bewegung und einer damit einhergehenden Größenveränderung des sichtbaren Teilbereichs derart verändert und/oder gesteuert wird, dass die Information auf dem sichtbaren Teilbereich der Anzeigefläche dargestellt wird und/oder bleibt. Mit anderen Worten erfolgt also eine dynamische Anpassung oder Optimierung der Informationsdarstellung, sodass beispielsweise keine Bereiche der Anzeigefläche zur Darstellung genutzt werden, die aufgrund der Verdeckung ohnehin nicht einsehbar oder nutzbar sind oder wären.

Vorteilhaft kann dadurch die Anzeigefläche in vielen oder allen Positionen, Stellungen oder Anordnungen sinnvoll genutzt werden. Beispielsweise wird vorteilhaft verhindert, dass eine Information eine Teilinformation oder ein Bedienelement für den jeweiligen Nutzer nicht sichtbar und/oder erreichbar und somit eine sachgemäße oder sachdienliche Nutzung Anzeigevorrichtung und/oder der dargestellten Information nicht möglich ist. Besonders vorteilhaft ist auch, dass durch die vorliegende Erfindung eine Doppelfunktionalität oder Doppelnutzung der Anzeigefläche ermöglicht wird. So kann die Bewegbarkeit, das heißt die bewegliche Lagerung, Halterung oder Anordnung der Anzeigefläche beispielsweise einem von der Informationsdarstellung gänzlich unabhängigen Zweck dienen und eine Nutzung dieses Zwecks ist gleichzeitig mit der Nutzung als Anzeigefläche sinnvoll und ohne Funktionsverlust möglich. Weiterhin kann vorteilhaft ein Energieverbrauch der Anzeigevorrichtung optimiert werden, indem beispielsweise ein verdeckter Teilbereich der Anzeigefläche nicht genutzt oder abgeschaltet wird.

Die Steuerung der Anordnung der Darstellung der Information kann auch eine Steuerung der Anordnung der Information selbst, beispielsweise innerhalb der Darstellung, meinen. Allgemein kann die Steuerung der Anordnung der Darstellung auf vielfältige Arten geschehen, welche auch flexibel ausgewählt und/oder angewendet werden können, beispielsweise je nach Art, Form, Größe und/oder Inhalt der Darstellung oder der Information. Beispielhaft seien hier eine Änderung, Anpassung oder Optimierung einer räumlichen Beziehung zwischen verschiedenen Teilen, Teilinformationen oder Teilbereichen der Darstellung und eine - vollständige oder nur bereichsweise Skalierung der Darstellung genannt.

Der Begriff der Information ist dabei in seiner breitesten Form zu verstehen und kann beispielsweise bildliche Darstellungen, Animationen oder Videodarstellungen, Text- oder Symboldarstellungen, abstrakte Muster, Rahmen und dergleichen mehr ebenso wie beliebige Kombinationen hieraus umfassen, die insbesondere auch in mehreren zusammenhängenden oder disjunkten Teilen dargestellt oder angeordnet sein oder werden können. Konkret kann die dargestellte Information beispielsweise Fahrzeugdaten, Navigationshinweise und/oder Multimediainhalte umfassen. Insbesondere kann die Information auch als Interface ausgebildet sein, welches beispielsweise eine Interaktion oder eine Steuerung von Funktionalitäten ermöglicht.

Welcher Teilbereich der Anzeigefläche jeweils sichtbar ist kann beispielsweise herstellerseitig vorgegeben oder definiert und an eine Steuerung der Bewegung der Anzeigefläche oder an eine Sensorik zur Erfassung oder Überwachung der Bewegung und/oder Stellung der Anzeigefläche gekoppelt sein Alternativ oder zusätzlich kann aber auch eine Erkennung, Erfassung oder Überwachung eines tatsächlichen Sichtfeldes oder einer tatsächlichen Sichtlinie eines oder mehrerer Fahrzeuginsassen oder Nutzer der Anzeigevorrichtung vorgesehen sein. Dann kann dynamisch bestimmt werden, welcher Bereich oder Teilbereich der Anzeigefläche jeweils den sichtbaren Teilbereich bildet.

In weiterer Ausgestaltung der Erfindung ist es vorgesehen, dass die Information auch bei, also insbesondere während und auch nach der physischen Bewegung der Anzeigefläche relativ zu dem Innenverkleidungselement in konstanter Position dargestellt wird, wenn und solange die Größe des sichtbaren Teilbereiches zur Darstellung der Information in einer vorgegebenen Standardgröße ausreicht. Mit anderen Worten wird die Information während der Bewegung der Anzeigefläche also kontinuierlich relativ zu der Anzeigefläche selbst verschoben und somit in anderen Teilen oder Teilbereichen der Anzeigefläche dargestellt. Aus Sicht eines relativ zu dem Innenverkleidungselement oder dem Fahrzeug insgesamt orts- oder positionsfesten Beobachters oder Betrachters der Anzeigefläche verbleibt die Darstellung der Information also an der gleichen Stelle, während sich die Anzeigefläche bewegt. Dadurch kann vorteilhaft der jeweilige Nutzer oder Betrachter die Darstellung auch während oder unabhängig von der Bewegung der Anzeigefläche ungestört, einfach und problemlos erkennen. Weiterhin vorteilhaft ist es, dass somit die Information - zumindest solange ausreichend Fläche in dem sichtbaren Teilbereich zur Verfügung steht - zuverlässig immer an der gleichen Stelle angezeigt wird und der jeweilige Fahrzeuginsasse dadurch die jeweilige Information besonders einfach und schnell wiederfinden wiedererkennen oder identifizieren kann. Dabei kann es insbesondere auch vorgesehen sein, dass bestimmte konkrete Informationen oder Arten oder Kategorien von Informationen an bestimmten unterschiedlichen Stellen oder Positionen und/oder in bestimmten festgelegten räumlichen Beziehungen relativ zueinander angezeigt werden. Beispielsweise kann es vorgesehen sein, dass ein Navigationshinweis auch bei einer durch eine entsprechende Steuerung veränderte oder angepasste Anordnung der Darstellung, - zumindest soweit möglich - immer unterhalb und/oder rechts von einer Multimediadarstellung oder -steuerung dargestellt wird. Derartige Positionen oder Anordnungen kann standardmäßig, beispielsweise herstellerseitig, vorgegeben aber auch durch einen jeweiligen Benutzer einstellbar oder anpassbar sein.

In weiterer Ausgestaltung der Erfindung ist es zum einen vorgesehen, dass die Darstellung der Information kompaktifiziert, komprimiert, verdichtet oder verkleinert wird, wenn die Größe des sichtbaren Teilbereiches durch die physische Bewegung der Anzeigefläche zu klein wird für eine Darstellung der Information in einer vorgegebenen Standardgröße. Zum anderen ist es vorgesehen, dass die Darstellung der Information bis zu der vorgegeben Standardgröße vergrößert, aufgeweitet und/oder aufgelockert wird oder dargestellt wird, wenn die Größe des sichtbaren Teilbereiches durch die physische Bewegung der Anzeigefläche groß genug wird für eine Darstellung der Information in der vorgegebenen Standardgröße. Als vorgegeben Standardgröße kann eine bestimmte Darstellungsgröße, -art, -gestalt und/oder -form definiert oder vorgegeben sein. Auch hier sind - ebenso wie bei allen andern Ausführungsformen oder Ausgestaltungen der Erfindung - selbstverständlich nutzerseitige Einstellungen oder Anpassungen möglich oder denkbar. Im Rahmen der Verdichtung kann beispielsweise ein engeres Zusammenrücken einzelner graphischer Elemente, das heißt eine Verringerung oder Verkleinerung von Zwischenräumen vorgesehen sein. Zusätzlich oder alternativ kann auch eine vollstände oder bereichsweise Skalierung der Darstellung vorgesehen sein. Diese Prozesse werden dann bei einer Vergrößerung des sichtbaren Teilbereichs in umgekehrter Art und Richtung durchgeführt. Dadurch kann vorteilhaft soweit und solange wie möglich eine für den jeweiligen Nutzer leicht erkennbare und bekannte oder vertraute Darstellung der Information aufrechterhalten werden, wodurch eine Nutzung der Information erleichtert und komfortabler wird.

In weiterer Ausgestaltung der Erfindung ist es vorgesehen, dass die Information in einer vereinfachten, weniger Fläche benötigenden Alternativdarstellung dargestellt wird, wenn die Größe des sichtbaren Teilbereiches durch die physische Bewegung der Anzeigefläche zu klein für eine Darstellung der Information in einer vorgegebenen Standardgröße und/oder -art wird oder ist. In entsprechender entgegengesetzter Art und Weise wechselt die Darstellung der Information von der Alternativdarstellung oder -form zu der Standardgröße oder -form, sobald dafür bei einer Vergrößerung des sichtbaren Teilbereichs genügen sichtbare Fläche oder Anzeigefläche zur Verfügung steht. Die Alternativdarstellung kann beispielsweise eine andere Gestalt oder Ausführung einer, mehrerer oder aller Teilbereiche, Teilinformationen oder Bedienelemente aufweisen. Durch eine solche vorgegebene Alternativdarstellung kann eine vorteilhafte Möglichkeit geschaffen oder bereitgestellt werden, um - insbesondere alternativ zu einer reinen Skalierung der Information bis zu einer nicht mehr erkennbaren oder nutzbaren Größe - auch bei verringerter Größe des sichtbaren Teilbereichs der Anzeigefläche eine optimale Erkennbarkeit und Nutzbarkeit der Information zu gewährleisten. Die Alternativdarstellung kann dabei bevorzugt den gleichen Informationsgehalt und/oder die gleichen Funktionalitäten oder Bedienelemente bereitstellen oder zugänglich machen wie sie in der Standardgröße oder -form der Darstellung vorgesehen sind. Dabei können beispielsweise auch mehrere Teilinformationen, Bedienelemente oder dergleichen zusammengefasst dargestellt oder zugänglich gemacht werden, etwa durch zusätzliche Verschachtelungen, Untermenüs oder dergleichen. Es ist aber auch denkbar, dass in der Alternativdarstellung nur eine Untermenge der in der Standardgröße oder -form der Darstellung vorgesehenen Information dargestellt wird.

Erfindungsgemäß ist es vorgesehen, dass jeweiligen Teilinformationen der dargestellten und/oder dazustellenden Information eine jeweilige Wichtigkeit zugeordnet wird. Die jeweiligen Teilinformationen werden dann einzeln oder gruppenweise nacheinander entgegen einer Reihenfolge ihrer Wichtigkeit ausgeblendet, wenn sich der sichtbare Teilbereich durch die physische Bewegung der Anzeigefläche unterhalb einer Minimalgröße verkleinert. In entsprechend entgegengesetzter Weise werden die jeweiligen Teilinformationen einzeln oder gruppenweise eingeblendet, wenn sich der sichtbare Teilbereich durch die physische Bewegung der Anzeigefläche oberhalb der Minimalgröße vergrößert. Die Wichtigkeit einer Teilinformation als Kriterium kann beispielsweise auch im Sinne einer Relevanz verstanden werden. Die Wichtigkeit oder Relevanz kann dabei beispielsweise bezogen sein auf oder abgeleitet sein von den übrigen dargestellten oder darzustellenden Teilinformationen, einer Reihenfolge einer jeweiligen Benutzung oder eines jeweiligen Aufrufens oder Anzeigens, und/oder eines sonstigen Kontextes. Der Kontext kann etwa bestimmt werden durch eine Fahrsituation oder eine Umgebung oder Position des Fahrzeugs oder dergleichen. Durch die Zuordnung einer Wichtigkeit und die Verwendung der Wichtigkeit als Kriterium für eine Auswahl der tatsächlich dargestellten Teilinformation oder Teilinformationen, kann vorteilhaft sichergestellt werden, dass eine begrenzte Fläche oder Größe des sichtbaren Teilbereichs jederzeit optimal und auch inhaltlich möglichst effizient genutzt oder ausgenutzt wird. Für ein gruppenweises Aus- oder Einblenden können jeweils mehrere Teilinformationen mit gleicher Wichtigkeit in einer oder als eine Gruppe zusammengefasst werden. Ebenso kann zusätzlich oder alternativ eine Gruppierung anhand einer Funktionalität oder eines Inhaltes der jeweiligen Teilinformationen vorgesehen sein. Beispielsweise können dann in einer Situation, in der eine bestimmte Teilinformation ausgeblendet wird, zunächst weitere Informationen aus derselben, ersten Gruppe ausgeblendet werden. Dies kann auch priorisiert werden über eine Ausblendung einer anderen Teilinformation aus einer anderen, zweiten Gruppe, die rein basierend auf der Rang- oder Reihenfolge der Wichtigkeiten an sich vor weiteren Teilinformationen aus der ersten Gruppe ausgeblendet werden würde.

In einer Weiterbildung der Erfindung ist es vorgesehen, dass die Anzeigevorrichtung und/oder das Fahrzeug eine Bedieneinrichtung zur Interaktion mit der dargestellten Information umfasst und als Kriterium zur Festlegung oder Bestimmung der jeweiligen Wichtigkeit der jeweiligen Teilinformation oder Teilinformationen eine jeweilige Interaktionshäufigkeit verwendet wird. Die Interaktionshäufigkeit kann dabei absolut oder relativ gegenüber anderen Teilinformationen bestimmt werden. Hierfür kann beispielsweise ein Zähler vorgesehen sein und die entsprechenden Zählerstände können in einem Zwischenspeicher nur für eine jeweilige Dauer einer einzelnen ununterbrochenen Betriebszeit nachgehalten oder verfolgt werden und/oder in einem nichtflüchtigen Speicher dauerhaft über Betriebsunterbrechungen der Anzeigevorrichtung und/oder des Fahrzeugs hinweg abgelegt werden. Interaktionen oder Interaktionsereignisse können beispielsweise ein Aufruf, eine Anzeige, eine Bedienung oder ein Bedienvorgang einen Bedienelements oder dergleichen sein. Dadurch ergibt sich vorteilhaft eine individuell optimierte und an ein tatsächliches Nutzungsverhalten angepasste oder abgestimmte Bestimmung oder Festlegung der jeweiligen Wichtigkeit und somit kann eine optimal angepasste Nutzung der Anzeigevorrichtung und der Information ermöglicht werden.

In weiterer Ausgestaltung der Erfindung ist es vorgesehen, dass die Anzeigevorrichtung und/oder das Fahrzeug eine Identifikationseinrichtung zur Identifizierung und/oder Erkennung einer Bedienperson oder eines Nutzers der Anzeigevorrichtung umfasst und eine jeweilige Wichtigkeit einer jeweiligen Teilinformation der dargestellten und/oder dazustellenden Information für jede identifizierte Bedienperson individuell festgelegt wird. Als Identifikationseinrichtung kann beispielsweise eine Kamera oder eine mit einer Kamera gekoppelte Bildauswerteeinrichtung dienen, welche beispielsweise eine Gesichtserkennung nutzt. Ebenso könnten andere biometrische Merkmale wie etwa ein Fingerabdruck oder dergleichen erfasst, ausgewertet und zur Identifikation verwendet werden. Aber auch ein einfaches Einloggen, beispielsweise mittels einer Eingabe eines Passworts kann als Identifikation im Sinne der vorliegenden Erfindung verstanden werden. Um eine individuelle Festlegung für jede Bedienperson zu ermöglichen kann es beispielsweise vorgesehen sein, in einer mit der Anzeigevorrichtung direkt oder indirekt gekoppelten Speichereinrichtung für jede identifizierte Bedienperson ein jeweiliges Profil oder Benutzerprofil anzulegen. In einem solchen Profil können entsprechende Statistiken, Einstellungen und Präferenzen abgelegt sein. Alternativ oder zusätzlich kann es auch vorgesehen sein, im Fahrzeug befindliche Personen anstelle einer persönlichen Identifikation nur prinzipiell als Personen zu erfassen oder zu erkennen und jeweilige Bewegungen oder Positionsveränderungen der Person oder Personen im Fahrzeug zu verfolgen oder nachzuverfolgen (Tracking). Damit kann beispielsweise eine individuelle Anpassung nur für die Dauer einer Fahrt realisiert werde. Die kann besonders vorteilhaft sein für Fahrzeuge, die von einer Vielzahl unterschiedlicher Personen genutzt werden, wie etwa Mietfahrzeuge.

Explizit kann es auch vorgesehen sein, dass mehrere Fahrzeuginsassen gleichzeitig identifiziert und/oder innerhalb des Fahrzeugs nachverfolgt werden. Ebenso können in dem Fahrzeug mehrere Anzeigevorrichtungen und/oder Anzeigeflächen vorgesehen sein. Vorteilhaft kann auch eine jeweilige Zuordnung zwischen einem identifizierten Fahrzeuginsassen und einer Anzeigefläche und/oder einer Instanz einer Darstellung einer Information vorgesehen sein oder vorgenommen werden. Auf diese Weise kann vorteilhaft sichergestellt werden, dass individualisierte Einstellungen - beispielsweise bezüglich der dargestellten oder darzustellenden Information, deren Anordnung oder dergleichen - in korrekter Zuordnung genau dem jeweiligen Fahrzeuginsassen dargestellt oder angezeigt wird, für den die jeweilige Individualisierung der Darstellung gilt oder vorgesehen ist.

In vergleichbarer oder analoger Weise wie für die Wichtigkeit und damit zusammenhängende Einstellungen beschrieben, kann auch bei der Kompaktifizierung oder Verdichtung eine Anpassung, Abstimmung oder Individualisierung bezüglich einer jeweiligen Bedienperson vorgesehen sein.

In weiterer Ausgestaltung der Erfindung ist es vorgesehen, dass an der Anzeigefläche oder in die Anzeigefläche integriert eine durch Berührung bedienbare Bedieneinrichtung (z.B. Touchscreen oder Touchpad) vorgesehen ist und durch Berührung eines Bedienelements der Bedieneinrichtung die physische Bewegung der Anzeigefläche steuerbar ist. Dadurch kann vorteilhaft besonders einfach von einer Bedienperson mit einer Bewegung oder an einer Stelle mit der dargestellten Information interagiert und die Anzeigefläche oder die Stellung oder Position der Anzeigefläche gesteuert oder angepasst werden. Es wird also ein deutlicher Komfortgewinn erzielt. Darüber hinaus kann eventuell auf ein separates dediziertes Bedienelement zur Steuerung der Stellung der Anzeigefläche verzichtet werden, wodurch sich Einsparungen hinsichtlich eines Fertigungsaufwandes und einer Bauteilanzahl oder Komplexität des Fahrzeugs ergeben können.

In weiterer Ausgestaltung der Erfindung ist es vorgesehen, dass als Anzeigefläche eine Fensterscheibe oder eine Fensterscheibenanordnung des Fahrzeugs verwendet oder genutzt wird. Hierfür kann beispielsweise auf oder integriert in der Fensterscheibe ein, insbesondere transparenter oder transluzenter, Bildschirm vorgesehen oder angeordnet sein. Solche Bildschirm können auch durch Berührung bedienbar sein, das heißt berührungs- und/oder annäherungsempfindlich oder -sensitiv ausgebildet sein (Touchscreen, Touchpad). Explizit können innerhalb eines Fahrzeugs oder an einem Fahrzeug auch mehrere solcher Bildschirme vorgesehen sein. Die Fensterscheiben heutiger Fahrzeuge stellen bisher eine weitestgehend ungenutzte Flächenressource da. Sie sind jedoch aufgrund ihrer Anordnung und Funktion typischerweise sehr einfach von jeweiligen Fahrzeuginsassen einzusehen und zu erreichen. Ebenso sind Fensterscheiben in vielen Fällen beweglich oder bewegbar, beispielsweise für Lüftungszwecke. Damit ist hier ein idealer Anwendungsfall für die vorliegende Erfindung gegeben.

Ein erfindungsgemäßes Fahrzeug ist mit einer erfindungsgemäßen Anzeigevorrichtung und einem entsprechenden Steuergerät ausgestattet. Eine relativ zu einem Innenverkleidungs- oder Interieurelement oder -bauteil beweglich gelagerte, gehaltene oder angeordnete Anzeigefläche der Anzeigevorrichtung ist mit dem Steuergerät direkt oder indirekt gekoppelt. Das Steuergerät ist dabei zur Steuerung einer Darstellung einer Information auf der Anzeigefläche in Abhängigkeit von einer verfügbaren Größe oder Fläche der Anzeigefläche eingerichtet. Um eine optimale Nutzbarkeit der Anzeigefläche in möglichst vielen Situationen zu ermöglichen, ist es erfindungsgemäß vorgesehen, dass das Steuergerät eine Prozessoreinrichtung und eine Speichereinrichtung umfasst, wobei die Speichereinrichtung einen durch die Prozessoreinrichtung ausführbaren Programmcode enthält oder aufweist, welcher jeweilige Verfahrensschritte, Steuerungen und dergleichen des erfindungsgemäßen Verfahrens kodiert oder beschreibt. Unter Verwendung des konkret dazu eingerichteten Steuergeräts und der Anzeigevorrichtung sind also - soweit entsprechend sinnvoll kombinierbar - eine, mehrere oder alle Ausführungsformen und Varianten des vorliegend erfindungsgemäßen Verfahrens durchführbar. Bei dem erfindungsgemäßen Fahrzeug kann es sich bevorzugt um einen Personenkraftwagen oder ein zur Personenbeförderung vorgesehenes Kraftfahrzeug handeln.

Die bisher, im Folgenden und in den Patentansprüchen beschriebenen funktionalen Aus- und Weiterbildungen des erfindungsgemäßen Verfahrens sowie die entsprechenden Vorteile sind entsprechend sinngemäß auch auf das erfindungsgemäße Fahrzeug und zur Durchführung des erfindungsgemäßen Verfahrens verwendete oder genutzte Einrichtungen und Bauteile übertragbar und umgekehrt.

Weitere Einzelheiten, Merkmale und Vorteile der Erfindung ergeben sich aus der nachfolgenden Beschreibung bevorzugter Ausführungsbeispiele sowie anhand der Zeichnung. Dabei zeigen:
- Fig. 1: eine schematische und ausschnittweise Perspektivdarstellung eines Bereichs um ein seitliches Fenster eines Kraftfahrzeugs mit einer Anzeigevorrichtung, wobei das Fenster geschlossen ist;
- Fig. 2: eine schematische und ausschnittweise Perspektivdarstellung des Bereichs aus Fig. 1, wobei das Fenster teilweise geöffnet ist;
- Fig. 3: eine schematische und ausschnittweise Perspektivdarstellung des Bereichs aus Fig. 2, wobei das Fenster noch weiter geöffnet ist;
- Fig. 4: eine schematische und ausschnittweise Perspektivdarstellung eines Bereichs um ein seitliches Fenster eines Kraftfahrzeugs mit einer Anzeigevorrichtung in einer alternativen Darstellung oder Ausführung, wobei das Fenster geschlossen ist;
- Fig. 5: eine schematische und ausschnittweise Perspektivdarstellung des Bereichs aus Fig. 4, wobei das Fenster teilweise geöffnet ist;
- Fig. 6: eine schematische und ausschnittweise Perspektivdarstellung des Bereichs aus Fig. 5, wobei das Fenster noch weiter geöffnet ist; und
- Fig. 7: eine schematische und ausschnittweise Perspektivdarstellung eines pilotierten Kraftfahrzeugs mit mehreren Anzeigevorrichtungen.

Gleiche und/oder funktionsgleiche Einrichtungen, Bauteile oder Merkmale sind in den Fig. jeweils mit den gleichen Bezugszeichen versehen.

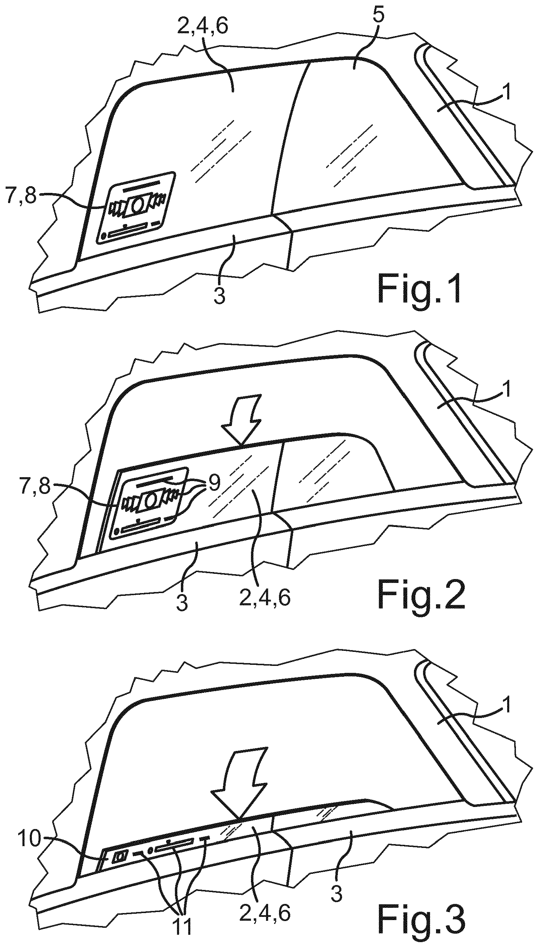

Fig. 1 eine schematische und ausschnittweise Perspektivdarstellung eines Seitenbereichs eines Kraftfahrzeugs 1 mit einem seitlichen Fenster, dessen Fensterscheibe 2 beweglich oder bewegbar und vorliegend in vollständig geschlossener Stellung oder Position, das heißt in Schließstellung dargestellt ist. Die Perspektivdarstellung ist dabei aus Sicht eines Fahrzeuginnenraums gezeigt, sodass hier eine Innenseite, das heißt eine dem Fahrzeuginnenraum zugewandte Seite der Fensterscheibe 2 zu sehen ist. Der ausschnittweise gezeigte Seitenbereich kann sich beispielsweise in einem Bereich einer Tür 3 des Kraftfahrzeugs 1 befinden. Ein in Fahrzeughochrichtung unterhalb der Fensterscheibe 2 angeordneter Teil der Tür 3 weist dabei eine Aufnahme oder einen Schacht auf, in welchem die Fensterscheibe 2 ganz oder teilweise aufgenommen wird, wenn sie aus der Schließstellung in Richtung einer Offenstellung, in der die Fensterscheibe 2 eine Fensteröffnung des Fensters ganz oder teilweise freigibt, verstellt oder bewegt wird.

Vorliegend ist die Fensterscheibe 2 zumindest teil- oder bereichsweise als Anzeigefläche 4 ausgebildet oder vorgesehen und weist dazu einen transparenten und durch Berührung bedienbaren Bildschirm (Touchscreen) auf - beispielsweise basierend auf einer OLED-Technologie (von englisch "organic light emitting diode"). Der Bildschirm kann beispielsweise auf ein Grundmaterial der Fensterscheibe 2 aufgebracht oder zwischen zwei Schichten der Fensterscheibe 2 angeordnet sein. Die Anzeigefläche 4 kann sich über die gesamte Fensterscheibe 2 erstrecken. Es ist aber beispielsweise auch denkbar, dass ein Scheibenteil 5 nicht von der Anzeigefläche 4 umfasst oder überdeckt wird.

In der vorliegend in Fig. 1 gezeigten Schließstellung der Fensterscheibe 2 ist die gesamte Anzeigefläche 4 aus Sicht oder Perspektive des Fahrzeuginnenraums für einen sich in dem Fahrzeuginnenraum aufhaltenden Fahrzeuginsassen sichtbar. Dementsprechend umfasst hier ein sichtbarer Teilbereich 6 der Anzeigefläche 4 vollständig die gesamte Anzeigefläche 4. Auf der Anzeigefläche 4 - und damit also insbesondere auf oder in dem sichtbaren Teilbereich 6 - ist vorliegend eine Darstellung 8 einer Information 7 angezeigt oder dargestellt. Dabei soll die hier gezeigte Größe und Gestalt der Darstellung 8 eine Standardgröße der Darstellung 8 sein, welche insbesondere weder in Fahrzeughochrichtung noch in Fahrzeuglängsrichtung jeweils die gesamt zur Verfügung stehende Ausdehnung oder Größe der Anzeigefläche 4 oder des sichtbaren Teilbereichs 6 benötigt oder beansprucht. Spezifisch befindet sich die Darstellung 8 vorliegend in einem in Fahrzeughochrichtung unteren und in Fahrzeuglängsrichtung vorderen Quadranten sowohl der Anzeigefläche 4 als auch des sichtbaren Teilbereichs 6 und auch der Fensteröffnung.

Die Information 7 kann beispielsweise ein Interface, das heißt eine Schnittstelle oder Benutzerschnittstelle mit einem oder mehreren Bedienelementen, sein oder ein solches umfassen. Zusätzlich oder alternativ kann die Information aber auch im Prinzip beliebige andere Inhalte umfassen. Als Bedienelement kann dabei beispielsweise ein bestimmter graphisch oder gestalterisch gekennzeichneter Bereich der Darstellung 8 sein, bei dessen Berührung eine bestimmte Funktion ausgelöst wird. Vorliegend kann die Information 7 beispielsweise über eine aktuell wiedergegebene Mediendatei informieren und die Darstellung 8 kann auch ein Anzahl von Bedienelemente zur Steuerung der Medienwiedergabe umfassen. Einzelne Teile der Information 7 ebenso wie einzelne Bedienelemente oder jeweilige Gruppen oder Gruppierungen werden hier als Teilinformationen 9 (siehe Fig. 2) bezeichnet.

Fig. 2 zeigt erneut eine schematische und ausschnittweise Perspektivdarstellung des bereits in Fig. 1 gezeigten Seitenbereichs des Kraftfahrzeugs 1, wobei hier jedoch das Fenster teilweise geöffnet ist. Die Fensterscheibe 2 befindet sich also nicht mehr in der Schließstellung, sondern in einer Zwischenstellung zwischen einer vollständig geschlossenen und einer vollständig geöffneten Position. Dementsprechend ist also der hier nicht sichtbare Teil oder Bereich der Fensterscheibe 2 und damit auch der Anzeigefläche 4 in der dafür vorgesehenen Aufnahme in der Tür 3 aufgenommen oder versenkt. Der sichtbare Teilbereich 6 ist demzufolge gegenüber der in Fig. 1 dargestellten Situation verkleinert, aber definitionsgemäß selbstverständlich weiterhin vollständig aus Sicht des Fahrzeuginnenraums sichtbar.

Während der durch einen Pfeil angedeuteten Bewegung der Fensterscheibe 2 von der Schließstellung in die in Fig. 2 gezeigte Stellung oder Position ist es zu einer Relativbewegung zwischen der Darstellung 8 und der Anzeigefläche 4 gekommen, da nunmehr die Darstellung 8 sich in einem in Fahrzeughochrichtung oberen, in Fahrzeuglängsrichtung aber weiterhin vorderen Quadranten der Fensterscheibe 2 und der Anzeigefläche 4 befindet. Aus Sicht des betrachtenden Fahrzeuginsassen hat sich die Darstellung 8 hingegen nicht bewegt, das heißt sie ist weiterhin in dem in Fahrzeughochrichtung unteren und in Fahrzeuglängsrichtung vorderen Quadranten der Fensteröffnung angeordnet. Lediglich durch eine entsprechende Einschränkung beispielsweise aufgrund einer Form der Fensterscheibe 2 kann je nach Ausführungsform eine minimale Verschiebung vorkommen.

In der in Fig. 2 gezeigten Situation ist die Darstellung 8 weiterhin in der Standardgröße dargestellt und alle Teilinformationen 9 sind weiterhin in derselben Lage und Anordnung relativ zueinander dargestellt. Die Darstellung 8 benötigt oder beansprucht nunmehr jedoch die gesamte in Fahrzeughochrichtung zur Verfügung stehende Ausdehnung des sichtbaren Teilbereichs 6.

Fig. 3 zeigt erneut eine schematische und ausschnittweise Perspektivdarstellung des bereits in Fig. 1 und in Fig. 2 gezeigten Seitenbereichs des Kraftfahrzeugs 1, wobei hier jedoch das Fenster noch weiter geöffnet ist. Die Fensterscheibe 2 befindet sich also noch näher als in Fig. 2 an ihrer Offenstellung und gibt somit mehr von der Fensteröffnung frei. Die entsprechende Bewegung von der in Fig. 2 dargestellten Situation in die in Fig. 3 dargestellte Situation ist auch hier durch einen Pfeil angedeutet. Da in der hier gezeigten nahezu vollständig geöffneten Stellung der Fensterscheibe 2 der sichtbare Teilbereich 6 erneut verkleinert ist und nicht mehr zur Anzeige der Darstellung 8 in der Standardgröße ausreicht, ist die bisher angezeigte Standarddarstellung automatisch durch eine Alternativdarstellung 10 ersetzt. Die Alternativdarstellung 10 stellt eine alternative, besonders kompakte Möglichkeit dar, zumindest eine Untermenge 11 der Teilinformationen 9 so darzustellen, dass jede einzelne Teilinformation aus der Untermenge 11 zumindest in einer vorgegebenen Minimalgröße darzustellen. Dazu wird nunmehr die volle oder zumindest eine größere Breite des sichtbaren Teilbereichs 6 in Fahrzeuglängsrichtung zur Anzeige der Alternativdarstellung 10 ausgenutzt oder verwendet. Hier können sich in der Alternativdarstellung 10 also auch relative Positionen einzelner Teilinformationen aus der Untermenge 11 gegenüber den relativen Positionen der entsprechenden Teilinformationen 9 in der Darstellung 8 unterscheiden. Funktional und/oder hinsichtlich ihres abstrakten Informationsgehaltes können die jeweiligen Teilinformationen jedoch den entsprechenden Varianten oder Alternativen in der Darstellung 8 entsprechen.

Eine stattdessen vorgenommene Skalierung der Darstellung 8, das heißt der Standarddarstellung, auf die Größe des sichtbaren Teilbereichs 6 in der in Fig. 3 gezeigten Situation hätte zur Folge, dass die einzelnen Teilinformationen 9 nicht mehr erkennbar oder unterscheidbar und/oder zuverlässig und gezielt bedienbar wären.

Zur Festlegung der Untermenge 11, das heißt der Auswahl derjenigen der Teilinformationen 9, die in der Alternativdarstellung 10 enthalten sind und dargestellt werden, ist jeder der Teilinformationen eine Wichtigkeit zugeordnet. Die Teilinformationen 9 werden dann bei einem Verstellen der Fensterscheibe 2 einzeln oder gruppenweise entsprechend ihrer jeweiligen oder relativen Wichtigkeit ausgeblendet.

Neben der Darstellung 8 und der Alternativdarstellung 10 können auch weitere Darstellungen mit jeweils bestimmten Anordnungen und/oder Gestaltungen und Untermengen von Teilinformationen vorgesehen oder definiert sein, die jeweils bei einem Unter- oder Überschreiten eines bestimmten Grenzwerts der Größe des sichtbaren Teilbereichs 6 automatisch angezeigt oder eingestellt werden.

In entsprechender aber umgekehrter Art und Weise kann beim Schließen des Fensters, wobei also die Fensterscheibe 2 von der Offenstellung oder der in Fig. 3 gezeigten Stellung in Richtung der in Fig. 1 gezeigten Schließstellung bewegt wird, automatisch von der Alternativdarstellung 10 zu der größeren und/oder ausführlicheren Darstellung 8 gewechselt werden. Auch hierfür ist es vorgesehen, dass die jeweils angezeigte der Darstellung 8 und der Alternativdarstellung 10 in einem aus Sicht des Fahrzeuginsassen und beispielsweise relativ zu der Tür 3 fixen Bereich - hier beispielsweise in einem in Fahrzeughochrichtung unteren Randbereich der Fensteröffnung - dargestellt werden. Für verschiedene Informationen 7 können dabei auch verschiedene Positionen vorgesehen sein und die jeweilige Darstellungsposition kann auch von dem Fahrzeuginsassen veränderbar oder anpassbar sein.

Insgesamt bleibt die Information 7 also vorteilhaft - jedenfalls soweit die jeweilige Größe des sichtbaren Teilbereichs 6 dies zulässt - in zumindest einer Form auch beim Öffnen und Schließen des Fensters, das heißt bei einer physischen Bewegung der Fensterscheibe 2 sichtbar und gegebenenfalls bedienbar.

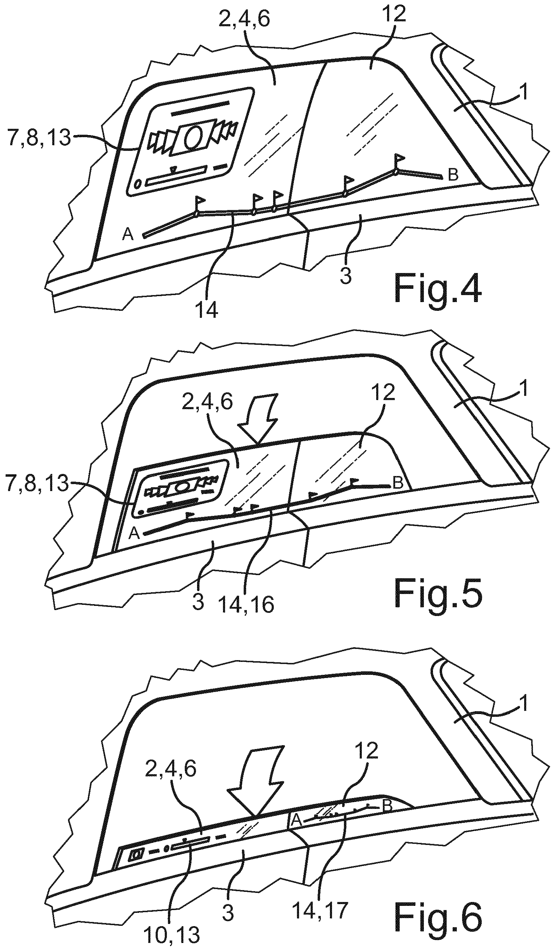

Die Fig. 4, 5 und 6 zeigen in einer jeweils schematischen und ausschnittweisen Perspektivdarstellung eine den Darstellungen der Fig. 1, 2 und 3 entsprechende Abfolge von unterschiedlichen Stellungen einer Fensterscheibe 2 in einer alternativen Ausführungsform. Hier umfasst die Anzeigefläche 4 tatsächlich die gesamte Fläche der Fensterscheibe 2, sodass auch der dem Scheibenteil 5 entsprechende Scheibenteil 12 zur Anzeige und Bedienung vorgesehen und eingerichtet ist. Vorliegend umfasst die hier dargestellte Information 7 eine Gruppe oder Untermenge 13 und eine Gruppe oder Untermenge 14 von Teilinformationen. Die Untermenge 13 kann beispielsweise der Darstellung 8 entsprechen, die Untermenge 14 kann beispielsweise eine Navigations- oder Routeninformation sein. Fig. 4 zeigt die Untermengen 13, 14 in jeweiligen Standardgrößen. Diese beanspruchen oder benötigen zusammengenommen für ihre Darstellung - im Gegensatz zur Darstellung 8 für sich alleine genommen in Fig. 1 - jedoch sowohl in Fahrzeughochrichtung als auch in Fahrzeuglängsrichtung die gesamte zur Verfügung stehende Höhe und Breite des sichtbaren Teilbereichs 6 bei vollständig geschlossenem Fenster, das heißt bei in Schließstellung angeordneter Fensterscheibe 2.

Fig. 5 zeigt eine Situation mit teilweise geöffnetem Fenster, welche im Wesentlichen der in Fig. 3 gezeigten entspricht. Im Gegensatz dazu reicht hier jedoch bereits zu Beginn oder unmittelbar nach Beginn der Bewegung der Fensterscheibe 2 aus der in Fig. 4 dargestellten Schließstellung heraus, der dann zur Verfügung stehende sichtbare Teilbereich 6 der Anzeigefläche 4 nicht mehr zur Anzeige der Untermengen 13 und 14 in Standardgröße aus. Dementsprechend werden bereits bei der in Fig. 5 gezeigten Stellung der Fensterscheibe 2 eine alternative Kompaktdarstellung 15 der Untermenge 13 und eine alternative Kompaktdarstellung 16 der Untermenge 14 angezeigt.

Die Kompaktdarstellung 15 beinhaltet dabei alle Teilinformationen und Elemente der Untermenge 13 in jeweils gleicher Ausführungs- oder Darstellungsform. Die einzelnen Teilinformationen oder einzelne graphische Elemente sind dabei jedoch näher zusammengerückt, sodass die gesamte Untermenge 13 kompaktifiziert oder verdichtet ist. Zusätzlich kann dabei auch eine Skalierung, das heißt eine Größenänderung, vorgesehen sein. Eine solche Skalierung ist hier beispielsweise für die Kompaktdarstellung 16 der Untermenge 14 vorgesehen. Auch die Kompaktdarstellung 16 beinhaltet oder zeigt also alle Teile der Untermenge 14, beansprucht dabei jedoch weniger Platz oder Fläche.

Bei der in Fig. 6 gezeigten Situation eines - entsprechend der Darstellung in Fig. 3 - fast vollständig geöffneten Fensters reicht die Größe des dann sichtbaren Teilbereiches 6 auch nicht mehr zur Anzeige der Kompaktdarstellungen 15, 16 aus. Dementsprechend werden dann auch hier automatisch die Alternativdarstellung 10 der Untermenge 13 und eine Alternativdarstellung 17 der Untermenge 14 angezeigt. Die Alternativdarstellungen enthalten oder umfassen beispielsweise andere Symbole und/oder nur eine Auswahl von Teilinformationen anstelle des vollen Gehalts oder Inhalts der Untermengen 13, 14 in der jeweiligen Darstellung in Standardgröße oder in der jeweiligen Kompaktdarstellung 15, 16. Um den sichtbaren Teilbereich 6 optimal auszunutzen ist hier die Untermenge 14 in ihrer Alternativdarstellung 17 nunmehr in Fahrzeuglängsrichtung neben anstelle von in Fahrzeughochrichtung unterhalb der Unterhalb der Untermenge 13 dargestellt und wird also ausschließlich in dem Scheibenteil 12 angezeigt.

Ansonsten können die Ausführungen zu den Fig. 1, 2 und 3 auch für Fig. 4, 5 und 6 gelten und/oder auf die dortigen Darstellungen und Situationen übertragen werden.

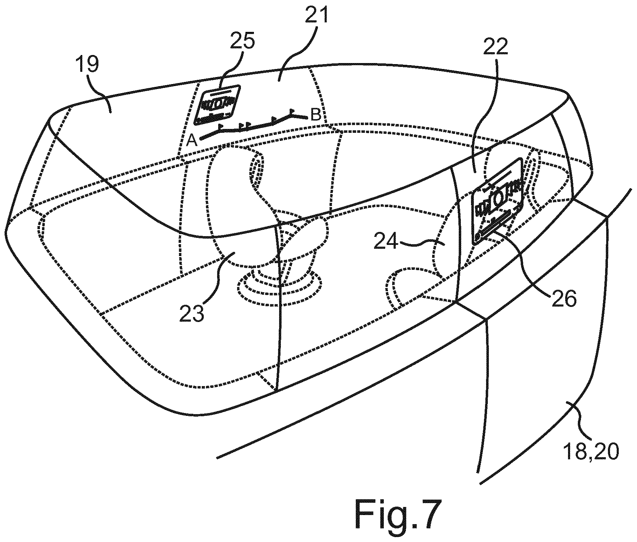

Fig. 7 zeigt in einer schematischen und ausschnittweisen Perspektivdarstellung ein Kraftfahrzeug 18. Das Kraftfahrzeug 18 kann insbesondere pilotiert, also für eine autonomes oder zumindest hochautomatisiertes Fahren eingerichtet und ausgelegt sein. Bei derartigen Kraftfahrzeugen 18 muss es nicht mehr zwangsläufig eine von herkömmlichen Kraftfahrzeugen bekannte Instrumententafel geben, sodass alternative Möglichkeiten zur Informationsdarstellung und zur Bedienung, Steuerung und Interaktion notwendig oder zumindest besonders vorteilhaft einsetzbar sind.

Das Kraftfahrzeug 18 weist eine umlaufende Fensterscheibenanordnung 19 auf, welche in Fahrzeughochrichtung oberhalb einer Seitenwand 20 des Kraftfahrzeugs 18 angeordnet ist. Die Fensterscheibenanordnung 19 kann in mehrere Teile unterteilt sein, von denen einer, mehrere oder alle, ähnlich wie von herkömmlichen Fahrzeugfensterscheiben bekannt, ganz oder teilweise in die Seitenwand 20 versenkbar oder in der Seitenwand 20 aufnehmbar sein können. Vorliegend sind zumindest zwei Scheibenflächen 21, 22 als zur Informationsdarstellung oder -anzeige eingerichtet und weisen dazu beispielsweise transparente Bildschirme auf. Es können aber auf weitere Flächen der Fensterscheibenanordnung 19 in gleicher Weise eingerichtet sein. Weiterhin umfasst das Kraftfahrzeug 18 vorliegend eine Anzahl von Sitzen, von denen hier beispielhaft zwei Sitze 23, 24 dargestellt sind. Für einen jeweiligen Sitzinsassen des Sitzes 23 ist die Scheibenfläche 21 problemlos einsehbar und für Bedienzwecke erreichbar und für einen Sitzinsassen des Sitzes 24 in entsprechender Weise die Scheibenfläche 22.

Auf der Scheibenfläche 21 ist vorliegend eine Darstellung 25 und auf der Scheibenfläche 22 eine Darstellung 26 angezeigt, für die insbesondere auch die entsprechenden Ausführungen zu den Darstellungen 8, 10, 15, 16 und 17 gelten sollen.

Das Kraftfahrzeug 18 weist auch eine, hier nicht dargestellte, Identifikationseinrichtung zur Erkennung und Identifizierung von Fahrzeuginsassen auf. Damit zumindest indirekt gekoppelt ist auch eine Speichereinrichtung vorgesehen, in der für einen identifizierten Fahrzeuginsassen ein Benutzerprofil gespeichert wird. Dieses Benutzerprofil kann Einstellungen und Präferenzen bezüglich der Darstellungen 25, 26 enthalten und zur Festlegung der Wichtigkeit einzelner Teilinformationen und zur Auswahl von Teilinformationen für eine jeweilige Alternativdarstellung der Darstellungen 25, 26 herangezogen oder berücksichtigt werden. Es ist also eine individuelle Anpassung und Optimierung der Darstellungen 25, 26 für jeden Fahrzeuginsassen möglich.

Eine entsprechende Identifikationseinrichtung kann aber auch in dem Kraftfahrzeug 1 vorgesehen sein. Insgesamt sollen die jeweiligen in den Fig.1 bis 3 und in den Figs.4 bis 6 und in der Fig.7 gezeigten und/oder im Zusammenhang mit diesen beschriebenen Details und Ausgestaltungen nicht nur für das jeweilige Ausführungsbeispiel gelten, sondern, sofern sinnvoll und technisch möglich, zwischen allen Ausführungsformen wechselseitig übertragbar sein.

## Patentansprüche

1. Verfahren zur Steuerung einer Anzeigevorrichtung für ein Fahrzeug (1, 18) mittels eines Steuergeräts, bei dem eine Darstellung (8, 25, 26) einer Information (7) auf einer relativ zu einem Innenverkleidungselement (3) des Fahrzeugs (1, 18) beweglich gelagerten Anzeigefläche (4, 21, 22) der Anzeigevorrichtung in Abhängigkeit von einer verfügbaren Größe (6) der Anzeigefläche (4, 21, 22) gesteuert wird,
wobei
- bei einer physischen Bewegung der Anzeigefläche (4, 21, 22) ein erster Teilbereich der Anzeigefläche (4, 21, 22) aus Sicht eines Fahrgastraum des Fahrzeugs (1, 18) verdeckt wird und ein übriger, aus Sicht des Fahrgastraums weiterhin sichtbarer Teilbereich (6) der Anzeigefläche (4, 21, 22) die verfügbare Größe (6) der Anzeigefläche (4, 21, 22) definiert, und
- eine Anordnung und/oder Größe der Darstellung (8, 25, 26) der Information (7) durch das Steuergerät in Abhängigkeit von der physischen Bewegung der Anzeigefläche (4, 21, 22) und einer damit einhergehenden Größenveränderung des sichtbaren Teilbereiches (6) derart verändert wird, dass die Information (7) auf dem sichtbaren Teilbereich (6) dargestellt wird,
**dadurch gekennzeichnet, dass**
- jeweiligen Teilinformationen (9, 11) der dargestellten und/oder dazustellenden Information (7) eine jeweilige Wichtigkeit zugeordnet wird und
- die Teilinformationen (9, 11) einzeln oder gruppenweise nacheinander entgegen einer Reihenfolge ihrer Wichtigkeit ausgeblendet werden, wenn sich der sichtbare Teilbereich (6) durch die physische Bewegung der Anzeigefläche (4, 21, 22) unterhalb einer Minimalgröße verkleinert, und
- die Teilinformationen (9, 11) in entsprechend entgegengesetzter Weise eingeblendet werden, wenn sich der sichtbare Teilbereich (6) durch die physische Bewegung der Anzeigefläche (4, 21, 22) oberhalb der Minimalgröße vergrößert.

2. Verfahren nach Anspruch 1,
**dadurch gekennzeichnet, dass**
die Information (7) auch bei der physischen Bewegung der Anzeigefläche (4, 21, 22) relativ zu dem Innenverkleidungselement (3) in konstanter Position dargestellt wird, wenn und solange die Größe des sichtbaren Teilbereiches (6) zur Darstellung (8, 25, 26) der Information (7) in einer vorgegebenen Standardgröße ausreicht.

3. Verfahren nach einem der vorhergehenden Ansprüche,
**dadurch gekennzeichnet, dass**
die Darstellung (8, 25, 26) der Information (7)
- kompaktifiziert wird, wenn die Größe des sichtbaren Teilbereiches (6) durch die physische Bewegung der Anzeigefläche (4, 21, 22) zu klein wird für eine Darstellung (8, 25, 26) der Information (7) in einer vorgegebenen Standardgröße, und
- bis zu der vorgegeben Standardgröße vergrößert wird, wenn die Größe des sichtbaren Teilbereiches (6) durch die physische Bewegung der Anzeigefläche (4, 21, 22) groß genug wird für eine Darstellung (8, 25, 26) der Information (7) in der vorgegebenen Standardgröße.

4. Verfahren nach einem der vorhergehenden Ansprüche,
**dadurch gekennzeichnet, dass**
die Information (7) in einer vereinfachten, weniger Fläche benötigenden Alternativdarstellung (10, 15, 16, 17) dargestellt wird, wenn die Größe des sichtbaren Teilbereiches (6) durch die physische Bewegung der Anzeigefläche (4, 21, 22) zu klein wird für eine Darstellung (8, 25, 26) der Information (7) in einer vorgegebenen Standardgröße.

5. Verfahren nach einem der vorhergehenden Ansprüche,
**dadurch gekennzeichnet, dass**
die Anzeigevorrichtung und/oder das Fahrzeug (1, 18) eine Bedieneinrichtung zur Interaktion mit der dargestellten Information (7) umfasst und als Kriterium zur Festlegung der jeweiligen Wichtigkeit der jeweiligen Teilinformationen (9,11) eine jeweilige Interaktionshäufigkeit verwendet wird.

6. Verfahren nach einem der vorhergehenden Ansprüche,
**dadurch gekennzeichnet, dass**
die Anzeigevorrichtung und/oder das Fahrzeug (1, 18) eine Identifikationseinrichtung zur Identifizierung einer Bedienperson umfasst und eine jeweilige Wichtigkeit einer jeweiligen Teilinformation (9, 11) der dargestellten und/oder dazustellenden Information (7) für jede identifizierte Bedienperson individuell festgelegt wird.

7. Verfahren nach einem der vorhergehenden Ansprüche,
**dadurch gekennzeichnet, dass**
an der Anzeigefläche (4, 21, 22) oder in die Anzeigefläche (4, 21, 22) integriert eine durch Berührung bedienbare Bedieneinrichtung vorgesehen ist und durch Berührung eines Bedienelements (9, 11) der Bedieneinrichtung die physische Bewegung der Anzeigefläche (4, 21, 22) steuerbar ist.

8. Verfahren nach einem der vorhergehenden Ansprüche,
**dadurch gekennzeichnet, dass**
als Anzeigefläche (4, 21, 22) eine Fensterscheibe (2, 19, 21, 22) des Fahrzeugs (1, 18) verwendet wird.

9. Fahrzeug (1, 18) mit einer Anzeigevorrichtung, welche eine relativ zu einem Innenverkleidungselement (3) des Fahrzeugs (1, 18) beweglich gelagerte Anzeigefläche (4, 21, 22) umfasst, und mit einem mit der Anzeigevorrichtung gekoppelten Steuergerät zur Steuerung einer Darstellung (8, 25, 26) einer Information (7) auf der Anzeigefläche (4, 21, 22) in Abhängigkeit von einer verfügbaren Größe (6) der Anzeigefläche (4, 21, 22),
**dadurch gekennzeichnet, dass**
das Steuergerät eine Prozessoreinrichtung und eine Speichereinrichtung mit einem durch die Prozessoreinrichtung ausführbaren Programcode umfasst, welcher Verfahrensschritte und/oder Steuerungen gemäß dem Verfahren nach einem der Ansprüche 1 bis 8 kodiert.

## Claims

1. Method for controlling a display device for a vehicle (1, 18) by means of a control device, in which a presentation (8, 25, 26) of a piece of information (7) on a display surface (4, 21, 22) of the display device mounted movably relative to an interior panelling element (3) of the vehicle (1,18), is controlled depending on an available size (6) of the display surface (4, 21, 22), wherein
- during a physical movement of the display surface (4, 21, 22), a first subregion of the display surface (4, 21, 22) is covered from the perspective of a passenger compartment of the vehicle (1, 18) and a further subregion (6) of the display surface (4, 21, 22), that is still visible from the perspective of the passenger compartment, defines the available size (6) of the display surface (4, 21, 22), and
- an arrangement and/or the size of the presentation (8, 25, 26) of the piece of information (7) is altered by the control device depending on the physical movement of the display surface (4, 21, 22) and a consequential accompanying size change of the visible subregion is changed such that the piece of information (7) is presented in the visible subregion (6),
**characterised in that**
- the respective information parts (9, 11) of the piece of information (7) that is displayed and/or to be displayed, are assigned a respective importance, and
- the information parts (9, 11) are hidden, individually or in groups one after the other, counter to an order of importance thereof, if the visible subregion (6) is reduced below a minimum size by the physical movement of the display surface (4, 21, 22), and
- the information parts (9, 11) are revealed in a correspondingly opposite manner, if the visible subregion (6) is increased above the minimum size by the physical movement of the display surface (4, 21, 22).

2. Method according to claim 1,
**characterised in that**
the piece of information (7) is also presented in a constant position in the case of the physical movement of the display surface (4, 21, 22) relative to the interior panelling element (3), if and as long as the size of the visible subregion (6) is sufficient for presentation (8, 25, 26) of the piece of information (7) in a predetermined standard size.

3. Method according to any one of the preceding claims,
**characterised in that**
the presentation (8, 25, 26) of the piece of information (7)
- is compacted if, due to the physical movement of the display surface (4, 21, 22), the size of the visible subregion (6) is too small for a presentation (8, 25, 26) of the piece of information (7) in a predetermined standard size, and
- is enlarged to the predetermined standard size if, due to the physical movement of the display surface (4, 21, 22), the size of the visible subregion (6) is large enough for a presentation (8, 25, 26) of the piece of information (7) in a predetermined standard size.

4. Method according to any one of the preceding claims,
**characterised in that**
the piece of information (7) is presented in a simplified alternative presentation (10, 15, 16, 17) requiring less area, if, due to the physical movement of the display surface (4, 21, 22), the size of the visible subregion (6) is too small for a presentation (8, 25, 26) of the piece of information (7) in a predetermined standard size.

5. Method according to any one of the preceding claims,
**characterised in that**
the display device and/or the vehicle (1, 18) comprises an operating unit for interaction with the presented piece of information (7) and a respective interaction frequency is used as criterion for determining the respective importance of each of the information parts (9, 11).

6. Method according to any one of the preceding claims,
**characterised in that**
the display device and/or the vehicle (1, 18) comprises an identification unit for identifying an operator, and an importance of a respective information part (9, 11) of the piece of information (7) that is presented or to be presented, is individually determined for each identified operator.

7. Method according to any one of the preceding claims,
**characterised in that**
a touch-operated operating unit is provided on the display surface (4, 21, 22) or integrated in the display surface (4, 21, 22), and the physical movement of the display surface (4, 21, 22) can be controlled by touching an operating element (9, 11) of the operating unit.

8. Method according to any one of the preceding claims,
**characterised in that**
a window pane (2, 19, 21, 22) of the vehicle (1, 18) is used as display surface (4, 21, 22).

9. Vehicle (1, 18) comprising a display device, which has a display surface (4, 21, 22) movably mounted relative to an interior panelling element (3) of the vehicle (1, 18) and having a control device coupled to the display device for controlling a presentation (8, 25, 26) of a piece of information (7) on the display surface (4, 21, 22) depending on the available size (6) of the display surface (4, 21, 22),
**characterised in that**
the control device comprises a processor unit and a memory unit having a program code that can be executed by the processor unit, which encodes method steps and/or controls of the method according to any of claims 1 to 8.

## Revendications

1. Procédé de commande d'un dispositif d'affichage pour un véhicule (1, 18) au moyen d'un dispositif de commande, dans lequel une représentation (8, 25, 26) d'une information (7), sur une surface d'affichage (4, 21, 22) montée de manière mobile par rapport à un élément d'habillage intérieur (3) du véhicule (1, 18), est commandée en fonction d'une taille (6) de la surface d'affichage (4, 21, 22) disponible,
selon lequel
- pendant un mouvement physique de la surface d'affichage (4, 21, 22), une partie de la surface d'affichage (4, 21, 22), visible à partir de l'habitacle du véhicule (1, 18), est recouverte et, en outre, une partie restante visible (6) de la surface d'affichage (4, 21, 22) à partir de l'habitacle définit la taille (6) disponible de la surface d'affichage (4, 21, 22), et
- un agencement et/ou une taille de la représentation (8, 25, 26) de l'information (7) à travers le dispositif de commande en fonction du mouvement physique de la surface d'affichage (4, 21, 22) et du changement correspondant de la taille de la partie visible (6) qui en découle, lequel est modifié de sorte que l'information (7) est affichée sur la partie visible (6),
**caractérisé en ce que**
- les informations partielles respectives (9, 11) des informations affichées et/ou à afficher (7) se voient attribuer une importance respective et
- les informations partielles (9, 11) sont masquées consécutivement individuellement ou en groupe dans l'ordre de leur importance, si la partie visible (6) est réduite sous une taille minimale par le mouvement physique de la surface d'affichage (4, 21, 22), et
- les informations partielles (9, 11) sont affichées de manière opposée correspondante si la partie visible (6) augmente au-dessus de la taille minimale en raison du mouvement physique de la surface d'affichage (4, 21, 22).

2. Procédé selon la revendication 1,
**caractérisé en ce que**
l'information (7) est également affichée dans une position constante pendant le mouvement physique de la surface d'affichage (4, 21, 22) par rapport à l'élément d'habillage intérieur (3) si et tant que la taille de la partie visible (6) pour la représentation (8, 25, 26) de l'information (7) dans une taille standard prédéterminée est suffisante.

3. Procédé selon l'une quelconque des revendications précédentes,
**caractérisé en ce que**
la représentation (8, 25, 26) de l'information (7)
- est compactée si la taille de la partie visible (6) est trop petite pour une représentation (8, 25, 26) de l'information (7) dans une taille standard prédéterminée en raison du mouvement physique de la surface d'affichage (4, 21, 22), et
- est agrandie jusqu'à la taille standard prédéterminée si la taille de la partie visible (6) est suffisamment grande pour une représentation (8, 25, 26) de l'information (7) dans la taille standard prédéterminée en raison du mouvement physique de la surface d'affichage (4, 21, 22).

4. Procédé selon l'une quelconque des revendications précédentes,
**caractérisé en ce que**
l'information (7) est représentée dans une représentation alternative simplifiée (10, 15, 16, 17) nécessitant moins d'espace si la taille de la partie visible (6) est trop petite pour une représentation (8, 25, 26) de l'information (7) dans une taille standard prédéterminée en raison du mouvement physique de la surface d'affichage (4, 21, 22).

5. Procédé selon l'une quelconque des revendications précédentes,
**caractérisé en ce que**
le dispositif d'affichage et/ou le véhicule (1, 18) comprend un dispositif de commande pour l'interaction avec l'information (7) représentée et une fréquence d'interaction respective est utilisée comme critère pour déterminer l'importance respective des informations partielles respectives (9, 11).

6. Procédé selon l'une quelconque des revendications précédentes,
**caractérisé en ce que**
le dispositif d'affichage et/ou le véhicule (1, 18) comprend un dispositif d'identification pour identifier un opérateur et une importance respective d'une information partielle particulière (9, 11) de l'information affichée et/ou à afficher (7) est déterminée individuellement pour chaque opérateur identifié.

7. Procédé selon l'une quelconque des revendications précédentes, **caractérisé en ce que**
un dispositif de commande pouvant être actionné par contact est fourni sur la surface d'affichage (4, 21, 22) ou intégré dans la surface d'affichage (4, 21, 22) et le mouvement physique de la surface d'affichage (4, 21, 22) peut être commandé en touchant un élément de commande (9, 11) du dispositif de commande.

8. Procédé selon l'une quelconque des revendications précédentes,
**caractérisé en ce que**
une vitre (2, 19, 21, 22) du véhicule (1, 18) est utilisée comme surface d'affichage (4, 21, 22).

9. Véhicule (1, 18) avec un dispositif d'affichage qui comprend une surface d'affichage (4, 21, 22) montée de manière mobile par rapport à un élément d'habillage intérieur (3) du véhicule (1, 18), et avec un dispositif de commande couplé au dispositif d'affichage pour commander une représentation (8, 25, 26) d'une information (7) sur la surface d'affichage (4, 21, 22) en fonction d'une taille disponible (6) de la surface d'affichage (4, 21, 22),
**caractérisé en ce que**
le dispositif de commande comprend un dispositif de processeur et un dispositif de mémoire avec un code de programme qui peut être exécuté par le dispositif de processeur et qui code des étapes de procédé et/ou des commandes selon le procédé selon l'une quelconque des revendications 1 à 8.
